# DEMANDE DE BREVET EUROPEEN

(11) **EP 2 392 545 A1**
(43) Date de publication de la demande: **07.12.2011**
(21) Numéro de dépôt: 11290240.8
(22) Date de dépôt: 24.05.2011
(51) Int. Cl.: C01B 13/08, F23L 7/00

(54) **Procédé et installation de production d'oxygène par boucle chimique en lit fluidisé**

(30) Priorité: 02.06.2010 FR 1002328
(71) Demandeur: IFP Energies nouvelles, 92852 Rueil-Malmaison Cedex (FR)
(72) Inventeur: Guillou, Florent, 69360 Ternay (FR); Hoteit, Ali, 75012 Paris (FR)

(57) **Abrégé**

- L'invention concerne un procédé et une installation de production d'oxygène de haute pureté, ledit procédé comprenant une boucle chimique dans laquelle circule un matériau en lit fluidisé ayant la capacité de libérer de l'oxygène gazeux par abaissement de la pression partielle d'oxygène, à une température comprise entre 400 et 700°C. L'oxygène ainsi produit peut être utilisé dans des applications telles que les procédés d'oxycombustion, de production de gaz de synthèse sous pression, de régénération de catalyseur FCC.

## Description

Le domaine de l'invention est celui de la production d'oxygène et plus particulièrement de la production d'oxygène dans le contexte du captage de CO_{2.}

L'invention concerne un procédé de production d'oxygène fonctionnant en lit fluidisé et mettant en oeuvre une boucle chimique dans laquelle circule un solide transporteur d'oxygène.

Alors qu'il y a moins de vingt ans, l'impact de l'Homme sur le changement climatique n'était qu'une hypothèse, les scientifiques affirment que la probabilité que le réchauffement climatique soit d'origine humaine est de plus de 90%. Les spécialistes mettent en cause le dioxyde de carbone (CO₂), puissant gaz à effet de serre provenant essentiellement de la combustion d'hydrocarbures dont la quantité rejetée dans l'atmosphère a doublé ces trente dernières années. La prise de conscience à l'échelle du monde est réelle et la classe politique mondiale est plus que jamais sensibilisée.

Pour réduire la quantité de dioxyde de carbone rejetée, une des solutions envisagées est le captage et le stockage du CO₂ provenant de centrales électriques alimentées en combustibles fossiles. Trois modes de captage du dioxyde de carbone sont actuellement envisagés:
- la postcombustion, qui consiste à séparer le CO₂ par le biais de colonnes de lavage aux amines; ce procédé est le plus mature mais est cependant très coûteux en énergie;
- la précombustion, pour laquelle le combustible fossile est préalablement gazéifié en un mélange de dioxyde de carbone et d'hydrogène. Après séparation du CO₂, l'hydrogène est utilisé pour produire de l'électricité et/ou de la chaleur. De nombreux verrous technologiques restent cependant à lever pour permettre l'utilisation de ce mode de combustion.
- l'oxycombustion, qui consiste à effectuer la combustion en présence d'oxygène pur et non d'air. Ce mode de combustion permet d'obtenir des fumées essentiellement composées de CO₂ et d'eau. L'oxygène utilisé provient d'une distillation cryogénique, très coûteuse en énergie.

Les unités d'oxycombustion présentent l'avantage de produire des fumées de combustion exemptes d'azote venant de l'air de combustion, puisque la combustion se fait à partir d'oxygène pur. Cet oxygène est généralement produit par une unité de séparation d'air (Air Separation Unit ou ASU, selon la terminologie anglo-saxonne). Un inconvénient de ce mode de combustion, et des ASU en particulier, est leur forte consommation énergétique et leur coût d'investissement élevé qui augmente le coût global du captage.

Le document US-6,059,858 décrit un procédé de type PSA (Pressure Swing Adsorption) pour la production d'oxygène. L'adsorbant utilisé est un solide de type perovskite ou CMS (tamis moléculaire à base de carbone) fonctionnant entre 300 et 1400°C. Le niveau de pression en désorption est compris entre 10⁻³ et 5 bar absolus.

Ce document décrit un procédé PSA utilisant comme solide adsorbant un oxyde pérovskite sous forme de particules de taille comprise entre 1 et 3 mm, fonctionnant à 900°C sous 10 bars en adsorption et 0,1 bar en désorption. Le gaz traité étant de l'air, le procédé produit d'une part, de l'azote à une pureté supérieure à 98%, et d'autre part, de l'oxygène à une pureté supérieure à 99,9%.

Cependant, la mise en oeuvre de ce procédé nécessite l'utilisation de plusieurs réacteurs distincts fonctionnant alternativement en phase d'adsorption ou de désorption. Pour produire un flux continu d'oxygène, il est donc nécessaire d'utiliser un nombre important de réacteurs (de 5 à 15), et de définir des séquences de fonctionnement précises pour chacun des réacteurs. Il en résulte un procédé relativement complexe à mettre en oeuvre, et entraînant des coûts d'exploitation et de maintenance importants. De plus, le niveau de pression requis pour la phase de désorption doit être faible, et donc coûteux à réaliser.

L'utilisation d'un procédé de production de l'oxygène en boucle chimique selon la présente invention permet de s'affranchir de ces inconvénients, notamment en ce qui concerne la pénalité énergétique liée à la séparation de l'oxygène de l'air, tout en présentant un potentiel important en terme d'efficacité énergétique et de réduction des coûts.

Par ailleurs, la quantité et la qualité (en terme de pureté) de l'oxygène produit sont telles, qu'il est avantageux d'envisager son utilisation dans des applications telles que les procédés d'oxycombustion, la production de gaz de synthèse sous pression, la régénération de catalyseur FCC.

Un autre avantage du procédé selon l'invention est que l'oxygène est produit à pression atmosphérique ou sous faible pression, dans une plage de température allant de 400 à 700°C, couramment employée dans les unités potentiellement disposées en aval du procédé de production d'oxygène selon l'invention.

Ainsi, la présente invention concerne un procédé de production d'oxygène de haute pureté fonctionnant en lit fluidisé et comprenant une boucle chimique, dans lequel on effectue les étapes suivantes:
- on oxyde un solide transporteur d'oxygène dans une zone réactionnelle d'oxydation (R1),
- on transporte en lit fluidisé ledit solide dans un état maximal d'oxydation vers une zone de production d'oxygène (R2),
- on libère l'oxygène dudit solide dans la zone de production par abaissement de la pression partielle d'oxygène à une température comprise entre 400 et 700°C,
- on recycle en lit fluidisé ledit solide dans un état diminué d'oxydation vers la zone d'oxydation,
- on produit un effluent gazeux contenant de l'oxygène par un conduit d'évacuation en sortie de la zone de production (R2).

On peut injecter dans la zone de production d'oxygène un effluent gazeux pauvre en oxygène.

Le solide transporteur d'oxygène peut être un composé répondant à la formule : AₓMnO_{2-δ}yH_{2O}, avec O<×≤2, 0≤y≤2 et -0,4≤δ≤0,4, où A est un ion alcalin ou alcalino-terreux ou un mélange d'ions alcalins et/ou alcalino-terreux. Le solide transporteur d'oxygène peut être choisi parmi: les oxydes de manganèse de type OMS comprenant au moins un oxyde de manganèse de formule générale A_{×}Mn_{y}O_{z}__{δ} à structure de tamis moléculaire avec un agencement sous forme de canaux à section polygonale, où 0<x≤2, 5≤y≤8, 10≤z≤16, -0,4≤δ≤0,4 et où A est au moins un élément sélectionné dans le groupe comprenant Li, Na, K, Pb, Mg, Ca, Sr, Ba, Co, Cu, Ag, Tl, Y, ou les oxydes mixtes fer-manganèse de formule générale (MnₓFe_{1-×})₂0₃ avec x compris entre 0,10 et 0,99 et dont la forme oxydée présente une structure bixbyite et/ou hématite.

Les particules de transporteur d'oxygène peuvent appartenir au groupe A et/ou B de la classification de Geldart.

La zone réactionnelle d'oxydation et la zone de production d'oxygène peuvent être opérées à une température comprise entre 500 et 600°C.

Le temps de séjour du solide transporteur d'oxygène peut être compris entre 10 et 600 secondes dans la zone d'oxydation (R1) et entre 1 et 360 secondes dans la zone de production d'oxygène (R2).

L'effluent gazeux pauvre en oxygène injecté dans la zone de production d'oxygène peut être choisi parmi: le dioxyde de carbone, la vapeur d'eau, et leur mélange.

L'invention concerne également une installation de production d'oxygène de haute pureté fonctionnant en lit fluidisé et comprenant une boucle chimique, comportant:
- une zone réactionnelle d'oxydation (R1) contenant un solide transporteur d'oxygène et comprenant une conduite d'alimentation en un effluent riche en oxygène, une conduite d'évacuation d'un effluent gazeux pauvre en oxygène, et des moyens de transport en lit fluidisé dudit solide dans un état maximal d'oxydation vers une zone de production d'oxygène (R2),
- la zone de production d'oxygène comporte des moyens d'abaissement de la pression partielle d'oxygène à une température comprise entre 400 et 700°C, une conduite d'évacuation d'un effluent gazeux riche en oxygène produit, des moyens de transport en lit fluidisé dudit solide dans un état diminué d'oxydation vers la zone d'oxydation.

Dans l'installation, les moyens d'abaissement de la pression partielle d'oxygène comportent une conduite d'introduction d'un effluent pauvre en oxygène dans ladite zone de production.

Les moyens de transport en lit fluidisé dudit solide dans un état maximal d'oxydation vers la zone de production d'oxygène peuvent comporter au moins un moyen de séparation gaz/solide.

On peut utiliser le procédé et de l'installation, pour alimenter en un effluent riche en oxygène des installations d'oxycombustion, de production de gaz de synthèse sous pression, de régénération de catalyseur FCC.

On désigne par le terme "porteur d'oxygène", tout oxyde métallique dont le degré d'oxydation du métal peut varier en fonction de sa teneur en oxygène. Cette variation peut être exploitée pour transporter de l'oxygène entre deux milieux réactifs. Dans un milieu oxydant riche en O₂, le degré d'oxydation du métal est à son degré d'oxydation maximal, c'est-à-dire que le solide porte une teneur en oxygène maximale. Dans un milieu pauvre en O₂, et/ou dans un milieu réducteur, le solide préalablement oxydé va céder une partie de son oxygène et voir son état d'oxydation diminuer par rapport à son degré d'oxydation maximal d'origine.

Un solide porteur d'oxygène est également défini par sa capacité de transport d'oxygène, c'est-à-dire la quantité d'oxygène que ce porteur est susceptible d'échanger de façon réversible entre son état le plus oxydé et le moins oxydé. On définit X comme la fraction de la capacité totale de transfert d'oxygène restant dans l'oxyde et on définit Δ× comme une variation de la fraction de la capacité de transfert d'oxygène totale.

Un transporteur d'oxygène utilisable pour l'invention est un solide, qui en plus de son comportement de porteur d'oxygène, va pouvoir majoritairement libérer spontanément son oxygène sous forme gazeuse dans le milieu réactionnel sans que celui-ci soit nécessairement réducteur.

Le procédé selon l'invention met en oeuvre en tant que transporteur d'oxygène un solide présentant une capacité de transfert d'oxygène comprise entre 0,1 et 15% en masse, de préférence entre 0,3 et 3% en masse.

Le procédé selon l'invention peut, par exemple et de manière avantageuse et préférée, mettre en oeuvre en tant que transporteur d'oxygène, un composé répondant à la formule: AₓMnO_{2-δ} yH₂O avec 0<x≤2, 0≤y≤2 et -0,4≤δ≤0,4, et préférentiellement 0<x≤1, où A est un ion alcalin ou alcalino-terreux (éléments IA ou IIA de la classification périodique des éléments) ou un mélange d'ions alcalins et/ou alcalino-terreux. Ces composés, encore appelés "birnessites", présentent une structure lamellaire composée de feuillets générés par l'enchaînement d'octaèdres liés entre eux par les arêtes. Ces composés sont décrits dans la demande de brevet français 09/06.013 de la demanderesse.

Le procédé selon l'invention peut également mettre en oeuvre des oxydes de manganèse de type OMS (Octahedral Molecular Sieves selon la terminologie anglo-saxonne) comprenant au moins un oxyde de manganèse de formule générale AₓMn_{y}O_{z-δ} à structure de tamis moléculaire avec un agencement sous forme de canaux à section polygonale, où 0<x≤2, 5≤y≤8, 10≤z≤16, -0,4≤8≤0,4 et où A est au moins un élément sélectionné dans le groupe comprenant Li, Na, K, Pb, Mg, Ca, Sr, Ba, Co, Cu, Ag, Tl, Y, tels que décrits dans la demande de brevet français 09/06.018 de la demanderesse, ou encore les oxydes mixtes fer-manganèse de formule générale (MnₓFe_{1-×})₂0₃ avec x compris entre 0,10 et 0,99 et dont la forme oxydée présente une structure bixbyite et/ou hématite, tels que décrits dans la demande de brevet français 09/02.095 de la demanderesse. Le transporteur d'oxygène mis en oeuvre dans le procédé selon l'invention peut également être choisi parmi les pérovskites, les brownmillerites, les matériaux supraconducteurs du type YBaCuO et les oxydes mixtes de type cérine dopée, ces matériaux étant décrits dans les demandes de brevet US2005/0176588, US2005/0176589 et US2005/0226798.

De manière préférée, les particules de transporteur d'oxygène appartiennent au groupe A ou B de la classification de Geldart, ou sont constituées d'un mélange de particules des deux groupes, la classification de Geldart classifiant l'aptitude à la fluidisation des particules.

Le réacteur air (ou zone réactionnelle R1) d'oxydation permet d'oxyder, sous sa forme la plus oxydée et au contact de l'air, le solide porteur d'oxygène qui a été au moins en partie réduit pour fournir de l'oxygène au système.

Le réacteur de production d'oxygène (ou zone réactionnelle R2) expose le solide porteur d'oxygène à une pression partielle d'oxygène maintenue basse par balayage d'un gaz vecteur ou par mise sous dépression. De cette façon, l'oxygène contenu dans le solide est libéré.

Le réacteur air (ou zone réactionnelle d'oxydation) et le réacteur de réduction (ou zone réactionnelle de réduction et de production d'oxygène) sont opérés à une température comprise entre 400 et 700°C, de préférence comprise entre 500 et 600°C.

Ces plages de températures modérées par rapport à celles relevées dans la littérature, généralement supérieures à 800°C, autorisent l'utilisation d'organes de contrôle des débits de solides, tels que des vannes mécaniques. Le temps de séjour du transporteur d'oxygène dans la zone d'oxydation R1 dépend de son état d'oxydation et/ou de réduction et varie généralement entre 10 et 600 secondes, de préférence entre 20 et 300 secondes.

Le temps de séjour du transporteur d'oxygène dans la zone de production d'oxygène R2 varie généralement entre 1 et 360 secondes, de préférence entre 1 et 120 secondes.

Le transporteur d'oxygène libère de l'oxygène en étant exposé à une pression partielle d'oxygène maintenue basse, notamment par le balayage avec un gaz vecteur pauvre en oxygène et riche en CO₂ et/ou H₂O, ou par mise sous dépression.

Directement à la sortie du réacteur de production d'oxygène R2, la pureté de l'oxygène produit dans le gaz vecteur est supérieure à 90% mol, en général supérieure à 95% mol. et en particulier supérieure à 98% mol.

Dans le réacteur de production d'oxygène, un gaz vecteur est injecté pour véhiculer l'oxygène produit vers au moins une autre section réactionnelle. Ce gaz vecteur est généralement choisi parmi le dioxyde de carbone et la vapeur d'eau ou un mélange des deux. De préférence, le gaz vecteur est la vapeur d'eau.

La concentration en oxygène dans le flux gazeux comprenant le gaz vecteur et l'oxygène est généralement comprise entre 5 et 20% vol., de préférence entre 7 et 15% vol.

Le procédé selon l'invention peut être avantageusement utilisé dans des applications telles que l'oxycombustion, la production de gaz de synthèse sous pression, la régénération de catalyseur FCC.

L'invention a également pour objet une installation permettant de mettre en oeuvre le procédé décrit ci-dessus.

Le procédé selon l'invention est illustré de manière non limitative à partir des figures ci-après annexées, parmi lesquelles:
- la figure 1 représente un premier mode de réalisation du procédé selon l'invention,
- la figure 2 représente un deuxième mode de réalisation.

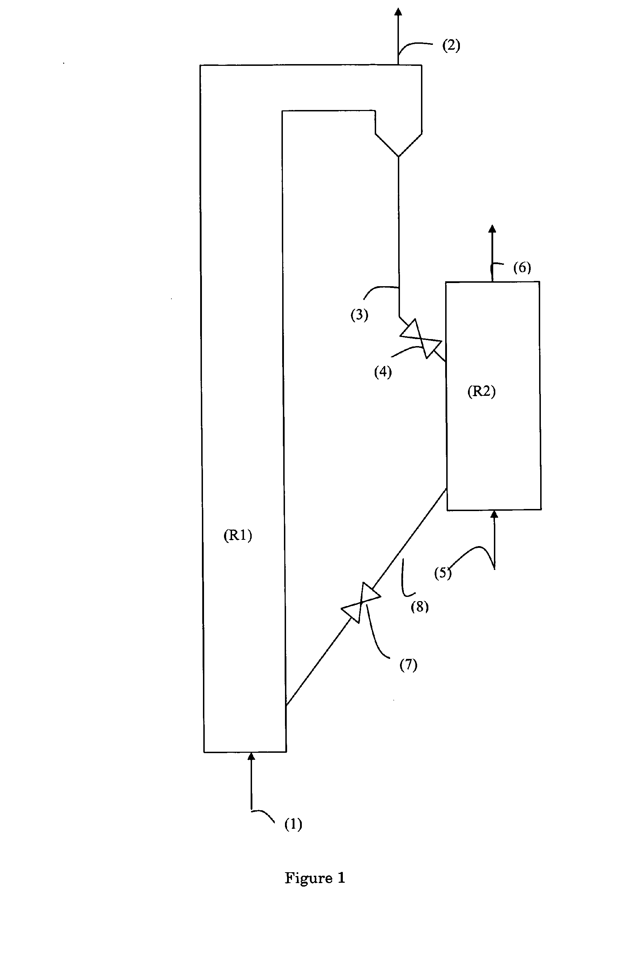

Selon la figure 1, l'installation comprend au moins:
- Une zone réactionnelle d'oxydation R1 mettant en oeuvre en lit fluidisé un solide transporteur d'oxygène provenant d'une zone réactionnelle R2 par le moyen d'une conduite (8) après passage par une vanne mécanique (7). Le solide transporteur d'oxygène est mis en contact dans la zone réactionnelle R1 avec de l'air amené par une conduite (1), pour y être oxydé au maximum. L'effluent gazeux pauvre en oxygène est extrait de la zone réactionnelle R1 par une conduite (2) et les particules de solides transporteurs d'oxygène sont évacuées par une conduite (3).

- Une zone réactionnelle R2 fonctionnant également en lit fluidisé dans laquelle s'effectue la production d'oxygène à partir des particules de solides transporteurs d'oxygène amenées par la conduite (3) après passage par une vanne mécanique (4) et en présence d'un effluent pauvre en oxygène et riche en vapeur d'eau amené dans la zone réactionnelle R2 par une conduite (5). L'effluent gazeux contenant de l'oxygène, mélangé à de la vapeur d'eau et/ou du dioxyde de carbone, est extrait de la zone réactionnelle R2 par une conduite (6). Les particules d'oxyde métallique en état d'oxydation diminué sont évacuées par une conduite (8) vers la zone réactionnelle d'oxydation R1.

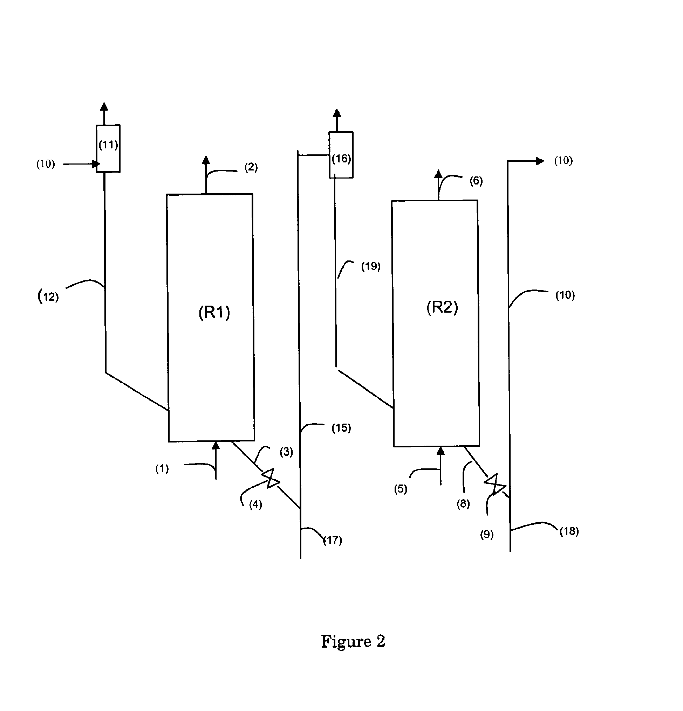

La figure 2 décrit un deuxième mode de réalisation de l'invention (dans lequel le solide transporteur d'oxygène (oxyde métallique) est mis en contact avec de l'air amené par une conduite (1) pour être oxydé dans la zone R1. La zone réactionnelle R1 peut comprendre un simple réacteur en lit fluidisé équipé d'une boîte de distribution du gaz sur la section, ou un lit fluidisé et des moyens de dépoussiérage (non représentés) de l'effluent gazeux pauvre en oxygène extrait de la zone réactionnelle R1 par une conduite (2), ou une combinaison de lits fluidisés, ou bien encore des lits fluidisés circulants avec recyclage interne ou externe de particules. Dans la zone réactionnelle R1, au moins une partie de la zone de contact entre l'air et l'oxyde métallique est constituée d'une phase fluidisée dense. Les particules d'oxyde métallique sont soutirées de la zone réactionnelle R1 par une conduite (3) et passent par une vanne mécanique (4) avant d'alimenter un conduit de transport pneumatique (15) alimenté en gaz de transport par une conduite (17).

A la sortie du conduit de transport pneumatique (15), au moins un moyen de séparation (16), par exemple un cyclone, permet de séparer le gaz de transport des particules qui sont transportées par un conduit (19) vers une deuxième zone réactionnelle R2 fonctionnant en lit fluidisé dans laquelle s'effectue la production d'oxygène au contact de particules d'oxyde et en présence d'un effluent pauvre en oxygène et riche en vapeur d'eau amené dans la deuxième zone réactionnelle par une conduite (5). La deuxième zone réactionnelle peut comprendre un simple réacteur en lit fluidisé équipé d'une boîte de distribution du gaz sur la section, ou un lit fluidisé et des moyens de dépoussiérage (non représentés) de l'effluent gazeux extrait de la zone réactionnelle R2 par une conduite (6) - ledit effluent gazeux contenant de l'oxygène mélangé à de la vapeur d'eau et/ou du dioxyde de carbone - ou une combinaison de lits fluidisés, ou bien encore des lits fluidisés circulants avec recyclage interne ou externe de particules. Dans la zone de production R2, au moins une partie de la zone de contact entre l'air et l'oxyde métallique est constituée d'une phase fluidisée dense. Les particules d'oxyde métallique sont soutirées de la deuxième zone réactionnelle R2 par une conduite (8) et passent par une vanne mécanique (9) avant d'alimenter un conduit de transport mécanique (10) alimenté en gaz de transport par une conduite (18). Dans la boucle chimique ainsi constituée, en sortie du conduit de transport mécanique (10), on dispose un moyen de séparation (11), par exemple un cyclone, permettant de séparer le gaz de transport des particules qui sont transportées par un conduit (12) vers la première zone réactionnelle R1 dans laquelle s'effectue l'oxydation.

Selon la figure 2, un procédé à boucle chimique constituée de deux zones réactionnelles est décrit, mais il est possible, selon l'invention, d'envisager un enchaînement de plusieurs couples de zones réactionnelles disposés en série et rebouclées.

### Exemple

On souhaite produire un débit de 100 t/h d'oxygène pour alimenter une unité de régénération de catalyseur FCC.

Le solide transporteur d'oxygène utilisé dans la boucle chimique répond à la formule (Mn_{0,4}Fe_{0,6})₂O₃.

La chaleur de réaction prise en compte est de 66,3 kJ par mole de O₂ produite.

Dans le cas du transporteur d'oxygène choisi, la fraction massique d'oxygène libérable spontanément dans le milieu réactionnel est de 1,5%, ce qui implique, pour pouvoir disposer de la quantité d'oxygène nécessaire, de fixer le débit de circulation de solide à 1851 kg/s en sortie du réacteur air d'oxydation. La température de fonctionnement de la boucle à la sortie du réacteur de production d'oxygène est de 500°C.

Le réacteur de production d'oxygène est balayé avec 415 m³/s de vapeur à 562°C.

Les fumées enrichies en oxygène à 10% vol. sont extraites du réacteur à une température de 500°C.

Au niveau du réacteur air, le flux de solide à 500°C est mis en contact avec 119 kg/s d'air à 425°C. Il en résulte, après la réaction inverse de la réaction de production d'O₂ un flux d'air appauvri en O₂ à 600°C et un flux de solide régénéré de 1851 kg/s à 600°C.

La boucle de combustion chimique est intégrée thermiquement de telle façon que la récupération de chaleur est optimisée.

Ainsi, le flux d'eau nécessaire à la formation du gaz vecteur est réchauffé et vaporisé par le flux enrichi en oxygène (184 kg/s à 500°C) pour porter la vapeur à 495°C.

Le flux d'air appauvri en oxygène permet de réchauffer la vapeur jusqu'à 562°C.

La chaleur résiduelle des flux enrichi et appauvri en oxygène permet de réchauffer les 119 kg/s d'air à 311°C. L'appoint nécessaire pour atteindre la température de 425°C est apporté par un dispositif de chauffage extérieur pour une puissance de 15 MWth.

Il en résulte un flux d'air appauvri en oxygène à 34°C.

Pour ce qui est du flux enrichi en oxygène, après avoir réchauffé et vaporisé l'eau, sa température tombe à 32°C. A cette température, l'eau liquide contenue dans le flux est prélevée et la composition en oxygène est alors de 95%, avant de refroidir le flux enrichi en oxygène au contact du flux d'eau à 15°C, ce qui permet d'atteindre une température de 17°C et de condenser encore une fraction de l'eau contenue dans le flux pour atteindre 96% de pureté en oxygène. Le seul composé présent en plus de l'oxygène est H₂O. Il ne subsiste aucun autre gaz non condensable que l'oxygène.

En ce qui concerne la consommation des utilités, elle est limitée à la compression de l'air en entrée du réacteur air, soit une consommation électrique estimée à 4 MWe.

Cette consommation électrique équivaut à 25 MWth avec un rendement de production d'électricité de 40%.

En comparaison, la perte de rendement liée à l'utilisation d'une ASU cryogénique est de l'ordre de 17,3 MWe pour une production de 100 t/h d'oxygène. Ceci conduit, en puissance thermique équivalente, à une valeur de 43 MWth avec le même rendement de production électrique, soit une pénalité énergétique supérieure d'environ 170% à la consommation d'une boucle chimique de production d'oxygène.

D'autre part, la composition de l'oxygène en sortie d'une ASU cryogénique est de 95% d'oxygène, soit une pureté équivalente à celle obtenue par boucle chimique. En revanche, les gaz résiduels sont des incondensables tels que l'argon et l'azote. Pour atteindre une pureté supérieure, il est nécessaire d'apporter beaucoup d'énergie complémentaire alors que dans le cas de la boucle chimique, la pureté de l'oxygène peut être augmentée simplement par condensation de l'eau résiduelle.

Ainsi, la production d'oxygène par boucle chimique présente non seulement un avantage substantiel du point de vue énergétique, mais aussi du point de vue qualitatif, c'est-à-dire de pureté de l'oxygène.

## Revendications

1. Procédé de production d'oxygène de haute pureté fonctionnant en lit fluidisé et comprenant une boucle chimique, dans lequel on effectue les étapes suivantes:
- on oxyde un solide transporteur d'oxygène dans une zone réactionnelle d'oxydation (R1),
- on transporte en lit fluidisé ledit solide dans un état maximal d'oxydation vers une zone de production d'oxygène (R2),
- on libère l'oxygène dudit solide dans la zone de production par abaissement de la pression partielle d'oxygène à une température comprise entre 400 et 700°C,
- on recycle en lit fluidisé ledit solide dans un état diminué d'oxydation vers la zone d'oxydation,
- on produit un effluent gazeux contenant de l'oxygène par un conduit d'évacuation en sortie de la zone de production (R2),
dans lequel le solide transporteur d'oxygène est un composé répondant à la formule : A_{×}MnO_{2-δ}yH₂O, avec 0<x≤2, 0≤y≤2 et -0,4≤5≤0,4, où A est un ion alcalin ou alcalino-terreux ou un mélange d'ions alcalins et/ou alcalino-terreux ou un composé choisi parmi: les oxydes de manganèse de type OMS comprenant au moins un oxyde de manganèse de formule générale AₓMn_{y}O_{z-δ} à structure de tamis moléculaire avec un agencement sous forme de canaux à section polygonale, où 0<×≤2, 5≤y≤8, 10≤z≤16, -0,4≤δ≤0,4 et où A est au moins un élément sélectionné dans le groupe comprenant Li, Na, K, Pb, Mg, Ca, Sr, Ba, Co, Cu, Ag, Tl, Y, ou les oxydes mixtes fer-manganèse de formule générale (MnₓFe₁₋ₓ)₂O₃ avec x compris entre 0,10 et 0,99 et dont la forme oxydée présente une structure bixbyite et/ou hématite.

2. Procédé selon la revendication 1, dans lequel on injecte dans la zone de production d'oxygène un effluent gazeux pauvre en oxygène.

3. Procédé selon l'une des revendications précédentes, dans lequel les particules de transporteur d'oxygène appartiennent au groupe A et/ou B de la classification de Geldart.

4. Procédé selon l'une des revendications précédentes, dans lequel la zone réactionnelle d'oxydation et la zone de production d'oxygène sont opérées à une température comprise entre 500 et 600°C.

5. Procédé selon l'une des revendications précédentes, dans lequel le temps de séjour du solide transporteur d'oxygène est compris entre 10 et 600 secondes dans la zone d'oxydation (R1) et entre 1 et 360 secondes dans la zone de production d'oxygène (R2).

6. Procédé selon l'une des revendications 2 à 5, dans lequel ledit effluent gazeux pauvre en oxygène injecté dans la zone de production d'oxygène est choisi parmi: le dioxyde de carbone, la vapeur d'eau, et leur mélange.

7. Installation de production d'oxygène de haute pureté fonctionnant en lit fluidisé et comprenant une boucle chimique, comportant:
- une zone réactionnelle d'oxydation (R1) contenant un solide transporteur d'oxygène et comprenant une conduite d'alimentation en un effluent riche en oxygène, une conduite d'évacuation d'un effluent gazeux pauvre en oxygène, et des moyens de transport en lit fluidisé dudit solide dans un état maximal d'oxydation vers une zone de production d'oxygène (R2),
- la zone de production d'oxygène comporte : des moyens d'abaissement de la pression partielle d'oxygène à une température comprise entre 400 et 700°C, lesdits moyens d'abaissement de la pression partielle comportant une conduite d'introduction d'un effluent pauvre en oxygène dans ladite zone de production; une conduite d'évacuation d'un effluent gazeux riche en oxygène produit; des moyens de transport en lit fluidisé dudit solide dans un état diminué d'oxydation vers la zone d'oxydation.

8. Installation selon la revendication 7, dans laquelle les moyens de transport en lit fluidisé dudit solide dans un état maximal d'oxydation vers la zone de production d'oxygène comportent au moins un moyen de séparation gaz/solide (16).

9. Utilisation du procédé selon l'une des revendications 1 à 6 et de l'installation selon l'une des revendications 7 à 8, pour alimenter en un effluent riche en oxygène des installations d'oxycombustion, de production de gaz de synthèse sous pression, de régénération de catalyseur FCC.
